# EUROPEAN PATENT APPLICATION

(11) **EP 0 716 522 A2**
(43) Date of publication of application: **12.06.1996**
(21) Application number: 95308760.8
(22) Date of filing: 05.12.1995
(51) Int. Cl.: H04J 14/02, H04L 12/28

(54) **Wavelength division multiplexed hybrid ring suitable for use in regional area networks**

(30) Priority: 07.12.1994 US 350864
(71) Applicant: AT&T Corp., New York, NY 10013-2412 (US)
(72) Inventor: Glance, Bernard, Colts Neck, New Jersey 07722 (US); Marra, William C., Bricktown, New Jersey 08724 (US); Kaminow, Ivan P., Holmdel, New Jersey 07733 (US); Schesser, Joel, Marlboro, New Jersey 07746 (US)
(74) Representative: Watts, Christopher Malcolm Kelway, Dr.

(57) **Abstract**

Disclosed is a wavelength division multiplexed hybrid ring formed from a plurality of telecommunications links that connect a plurality of switching nodes, each telecommunications link comprising: at least one optical fiber adapted for transporting a plurality of wavelength division multiplexed channels, wherein each of the plurality of optical channels is defined by a different wavelength; and at least one branching unit disposed along the at least one optical fiber, wherein the at least one branching unit includes at least one add-drop multiplexer for adding and dropping predetermined ones of the plurality of optical channels to and from a terminal coupled to the branching unit, and the branching unit is adapted to pass predetermined ones of the plurality of optical channels between the plurality of switching nodes.

## Description

### Technical Field

This invention relates to the ring networks. More particularly, this invention relates to a wavelength division multiplexed hybrid ring suitable for use in regional area networks.

### Background of the Invention

The global fiber optic telecommunications network has been growing rapidly due**.** in part, to the superior quality of service and high capacity such networks provide. It is estimated that more than 60 countries are presently connected to the global fiber optic network and, by the turn of the century, this number will grow to more than 100. However, there are still many large regions of the globe that are unable to receive the benefits that global communications connectivity brings due, for example, to lack of infrastructure, geographic isolation, and other technical impediments. Moreover, telecommunications may also be limited in the region itself. Although such regions could employ, or may already employ, distributed local area or wide area networks (LANs and WANs, respectively), it is often economically infeasible to provide reliable connectivity among such distributed networks, and connectivity to the present global fiber optic network. Compatibility among divergent network protocols in such a scheme is one example of the connectivity challenge. Furthermore, it is generally imprudent to rely on a series of interconnected LANs and WANs to facilitate the desired regional and global telecommunications capability since unreliable or inefficient operations in a single one of the local networks has the potential to negatively influence the telecommunications performance of the entire region. It is therefore an object of the invention to effect a fiber optic telecommunication network that is suitable for application in regional area networks. It would be desirable for such a fiber optic telecommunications network to have: immunity from problems at the local level; high reliability and fault tolerance; full connectivity to the global fiber optic telecommunications network and/or other networks; flexibility in communications traffic control and routing; high capacity and capability for provision of broadband services; and, future expandability.

### Summary of the Invention

These and other objects are provided for by a wavelength division multiplexed hybrid ring formed from a plurality of telecommunications links that connect a plurality of switching nodes. each telecommunications link comprising: at least one optical fiber adapted for transporting a plurality of wavelength division multiplexed channels. wherein each of the plurality of optical channels is defined by a different wavelength: and at least one branching unit disposed along the at least one optical fiber, wherein the at least one branching unit includes at least one add-drop multiplexer for adding and dropping predetermined ones of the plurality of optical channels to and from a terminal coupled to the branching unit, and the branching unit is adapted to pass predetermined ones of the plurality of optical channels between the plurality of switching nodes.

### Brief Description of the Drawings

FIG. 1 is a simplified block diagram of an illustrative example of a hybrid ring network 100, in accordance with the invention.

FIG. 2 is a simplified diagram showing details of a telecommunications link used in the hybrid ring shown in FIG. 1, in accordance with the invention.

FIG. 3 illustrates details of branching units which are utilized in the ring transmission shown in FIG. 1, in accordance with the invention.

FIGs. 4, 5, and 6 illustrate power configuration states for branching units 150 under various conditions, in accordance with the invention.

FIG. 7 shows the traffic paths in the hybrid ring network shown in FIG. 1, in accordance with the invention.

FIG. 8 illustrates fault tolerance in a hybrid ring network, in accordance with the invention.

### Detailed Description

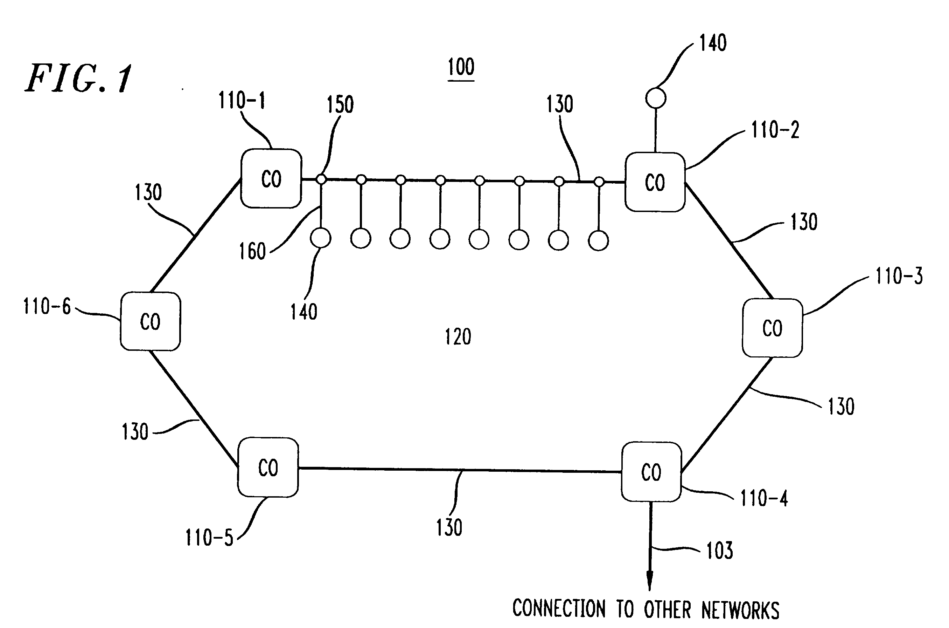

FIG. 1 is a simplified block diagram of an illustrative example of a hybrid ring network 100, in accordance with the invention. Hybrid ring network 100 may be used. for example, to implement a regional area telecommunications network. The term "region" as used herein is intended to refer to a geographic area for which telecommunications capability is desired. Typically, a region is a large area such as city or even a continent. however, the principles of the invention may also be readily applied to geographic areas served by relatively small LANs, for example, an office building. Hybrid ring network 100 includes a plurality of switching nodes, which may be, for example, central offices ("COs") 110. COs 110 are arranged in a ring around region 102, as shown. COs are known in the art and perform a full range of communications traffic networking, for example mapping and switching, according to conventional methods. COs 110 are contemplated to include, for example, optical interfaces, transmission equipment, multiplexing equipment, cross-connect equipment, and switches, such as a 4ESS or 5ESS central office switches produced by AT&T. All such devices are known. It is noted that COs 110 may connect other telecommunication offices via transmission facilities that are typically utilized in the art. Hybrid ring network 100 may carry traffic unidirectionally or bidirectionally. In this illustrative example, six COs 110 are shown, however, it is contemplated that any number of COs could readily be utilized in applications of the invention. The use of COs in hybrid ring network 100 advantageously allows full connectivity and compatibility with other networks external to the ring, including the global fiber optic network. These other networks could include local area, metropolitan area, and wide area networks, as well as public switched telephone networks. An exemplary external connection is represented by reference numeral 103, couples as shown to CO 110-4 in FIG. 1. Such an external connection may include an optical fiber, or telecommunications link 130, as described below.

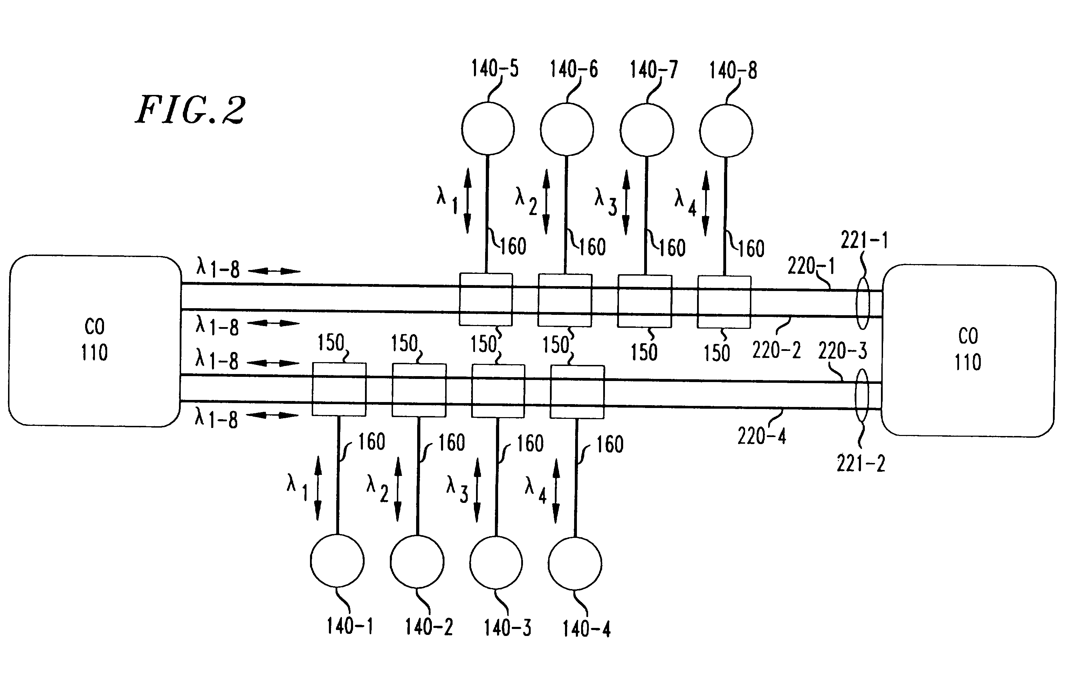

COs 110 may be coupled using, for example, telecommunications links 130 as shown. FIG. 2 is a simplified diagram showing details of telecommunications link 130. Each telecommunications link 130 includes a plurality of conventional optical fibers 220, as shown in FIG. 2. Optical fibers 220 could be, for example, dispersion shifted, single mode optical fibers. Those skilled in the art will recognize that optical fibers 220 in telecommunications link 130 may be collected in a conventional cable arrangement (not shown). Telecommunications links 130 may be physically deployed on land, undersea, or in combinations thereof. Telecommunications links 130 may additionally include integrated optical repeaters, such as fiber amplifiers, or regenerators (not shown) or be repeaterless. If optical repeaters or regenerators are used, then the above-described cable arrangements may include provision for power conduction to the repeaters, such as conductive lines or sheathing. In this illustrative example, it is intended that hybrid ring network 100 employs a series of concatenated fiber amplifiers in each telecommunications link 130. Fiber amplifiers may be, for example, optical fibers which are doped with rare earth elements such as erbium. Telecommunications link 130 includes, in this illustrative example, four optical fibers 220, which are arranged in two bidirectional optical fiber pairs 221-1 and 221-2. However, it may desirable in some applications of the invention to use other than four optical fibers to connect the COs, for example, eight optical fibers, or use other arrangements of optical fiber pairs.

Referring back to FIG.1, disposed along an exemplary telecommunications link 130 are a plurality of terminals which are typically used to provide telecommunications service connections to localities within the region. The term "locality" as used herein, for example, may refer to a country in a continent, as well as to a suite in an office complex. In this illustrative example the terminals are shown as cable stations 140 as shown. Cable stations 140 may be termination points for communications traffic being transported in hybrid ring network 100, or may be used as switching node connections to locally deployed LANs and WANs, if desired. In this illustrative example, but not as a limitation on the invention, communications traffic being transported in hybrid ring network 100 may be digital signal in accordance with International Telecommunications Union Synchronous Digital Hierarchy ("SDH") digital signal formats, including Synchronous Transport Module level 1 ("STM-1") digital signals and Synchronous Transport Module level 16 (STM-16) digital signals.

Each cable station 140 is coupled to telecommunications link 130 using one of a plurality of branching units 150 and one of a plurality of branch cables 160, as shown. Branch cables 160 may include optical repeaters or regenerators, or be repeaterless. In this illustrative example, eight cable stations 140 are shown coupled to a single exemplary telecommunications link 130, however, arrangements of any number of cable stations coupled to one or more telecommunications links 130 are contemplated to fall within the spirit and scope of the invention. Of course, those skilled in the art will recognize that the actual number of cable stations used in applications of the invention will depend on the number of optical fibers and wavelengths available. It is also intended that additional cable stations 140 may be coupled to COs 110 directly. This aspect of the invention is illustrated in FIG. 1 as a single cable station 140 being coupled directly to CO 110-2. Thus, for example, if eight COs 110 are utilized in hybrid ring network 100 (where each CO 110 is coupled directly to a cable station 140), and the COs 110 are coupled with eight telecommunications links 130 (where each telecommunications link 130 is coupled to eight cable stations 140), then a total of 72 cable stations are provided. Further discussion related to cable stations 140, branching units 150, and branch cables 160 is provided below. It is evident that the utilization of COs 110, telecommunications links 130, branching units 150, and branching cables 160 advantageously provide for a modular hybrid ring network that may be incrementally expanded to encompass additional service area in the region 102 as demand warrants. Accordingly, in accordance with the principles of the invention, hybrid ring network 100 may take on a number of different network topologies, including for example, complete rings, partial rings, busses, or combinations thereof.

FIG. 2 also illustrates operation aspects of the hybrid ring network 100 shown in FIG. 1, in accordance with the invention. Specifically, telecommunications links 130 carry a plurality of wavelength division multiplexed optical signals. Each optical fiber 220, then, carries a plurality of optical channels, where each channel is defined by a different wavelength λ_{N}. For clarity in exposition, the wavelengths are conveniently numbered from 1 to N from lowest to highest wavelength. Within each telecommunications link 130, each optical fiber pair 221 uses the same wavelengths 1 to N, resulting in a total 2N optical channels. In this illustrative example, eight different wavelengths are utilized, that is N=8. However, other values for N may also be used. With N=8, those skilled in the art will recognize that since two optical fiber pairs 221 are used, a total of sixteen bidirectional optical channels are realized on each telecommunications link 130. In accordance with the principles of the invention, the eight wavelengths are functionally distributed into local or express wavelengths. The local wavelengths within a particular telecommunications link 130 carry communications traffic between COs 110 and cable stations 140. The express wavelengths directly carry communications traffic between COs 110 without communications connectivity to cable stations 140. In this illustrative example, four wavelengths are used for local and four wavelengths for express on each fiber optic pair, for a total of eight local wavelengths and eight express wavelengths in each telecommunications link 130. However other distributions may be desirable in certain applications of the invention. For example, the ratio of express to local wavelengths may vary in proportion to communication traffic loading and utilization conditions. Such variation may also occur between telecommunications links 130, that is, the ratio between local and express wavelengths may vary from telecommunications link to telecommunications link. Those skilled in the art will further recognize that if the total number of wavelengths exceeds the number of cable stations 140, then an excess bandwidth situation exists. This excess bandwidth can be distributed to the telecommunications links 130 as additional local or express wavelengths, or reserved for future network expansion. Advantageously, the functional distribution between local and express wavelengths described above provides a high degree of flexibility in communications traffic control and routing in hybrid ring network 100 which may be particularly desirable in certain applications of the invention.

Branching units 150 are utilized to selectively add and drop communications traffic to and from cable stations 140. In accordance with the principles of the invention, a particular local wavelength is associated with only one cable station 140 on each optical fiber pair. Thus, in this illustrative example λ₁ is assigned to cable station 140-1, λ₂ is assigned to cable station 140-2, λ₃ is assigned to cable station 140-3, and λ₄ is assigned to cable station 140-4 on optical fiber pair 221-1. On optical fiber pair 221-2, λ₁ is assigned to cable station 140-5, λ₂ is assigned to cable station 140-6, λ₃ is assigned to cable station 140-7, and λ₄ is assigned to cable station 140-8. Express wavelengths 5-8 on each optical fiber pair 221, which carry communication traffic from CO 110 to CO 110. pass through branching units 150 without being added or dropped. In accordance with the principles of the invention, the above described operations are used within each telecommunications link 130 to achieve a regional area telecommunications network. Accordingly, those skilled in the art will appreciate that the same wavelengths λ_{N} are used in the other optical spans 130. Furthermore, the association of a particular local wavelength to only one particular cable station 140 advantageously limits the cable station's ability to negatively affect the operation of the entire hybrid ring network 100 should local conditions cause a deterioration in the performance of that particular cable station. Moreover, this advantageous limitation on the local cable station may be further enhanced, in certain applications of the invention, by locating telecommunications links 130 and cable stations 140 in a physically distant location, for example, underseas if warranted.

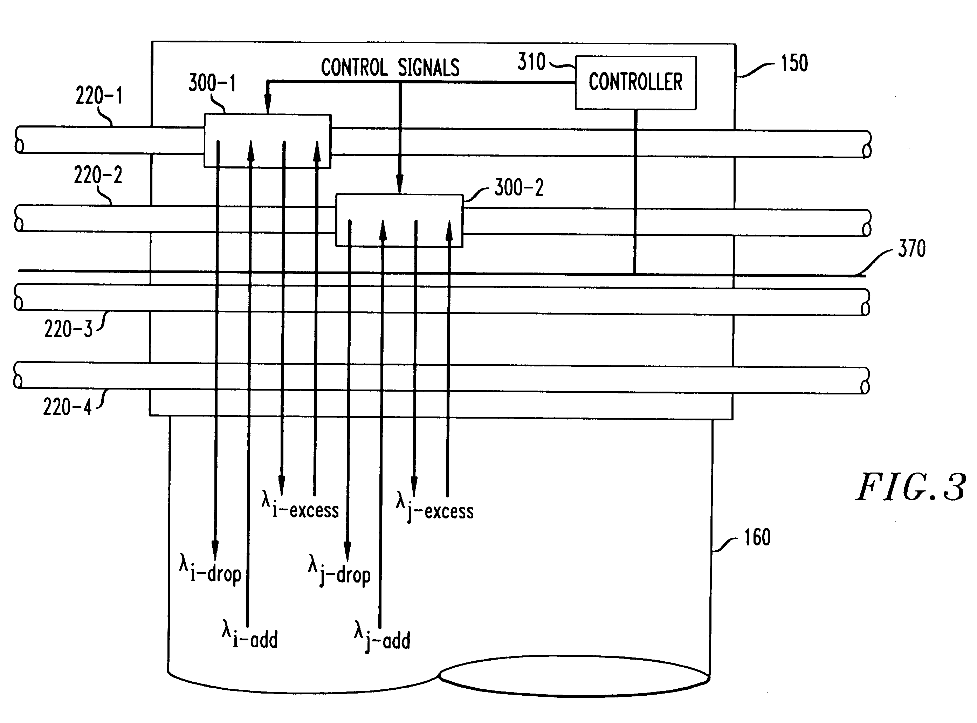

Details of branching units 150 are illustrated in FIG. 3. As shown, branching units 150 include a plurality of add-drop multiplexers 300 which are coupled to telecommunications link 130 including optical fibers 220, and controller 310. Add-drop multiplexer 300-1 is coupled to optical fiber 220-1. Add-drop multiplexer 300-2 is coupled to optical fiber 220-2. Controller 310 is coupled, as shown, to each add-drop multiplexers 300. Controller 310 is also coupled to power conductor 370 to control the power conduction to the optical repeaters which are utilized in this illustrative example.

As discussed above, branching units 150 couple cable stations 140 to telecommunications link 130 via branch cable 160. Add-drop multiplexers 300 could comprise, for example, Fabry-Perot gratings, Bragg gratings, couplers and splitters which are well known. Alternatively, add-drop multiplexers 300 may comprise optical channel dropping filters with integrated transceivers as described in United States patent application serial number 08/152,517, the disclosure of which is incorporated by reference herein. Add-drop multiplexers may also comprise optical channel adding/dropping filters as described in United States patent application serial number 08/184,165, the disclosure of which is incorporated by reference herein Add-drop multiplexers may also comprise fast tunable channel dropping filters as described in United States patent application serial number 08/153,523, the disclosure of which is incorporated by reference herein. Add-drop multiplexers 300 are tuned to selectively add and drop communications traffic at the desired wavelength as discussed above, for example, in response to control signals from controller 310. Controller 310 may also be used to control the power distribution in repeatered applications, for example, undersea applications. It should be noted that controller 310 is optionally utilized for wavelength selection, however, it is preferably used for power distribution by controlling the power configurations states for branching units 150. Controller 310 may be a conventional programmable microprocessor. for example. It may desirable in some applications of the invention to centrally control the operation of all controllers 310 in branching units 150.

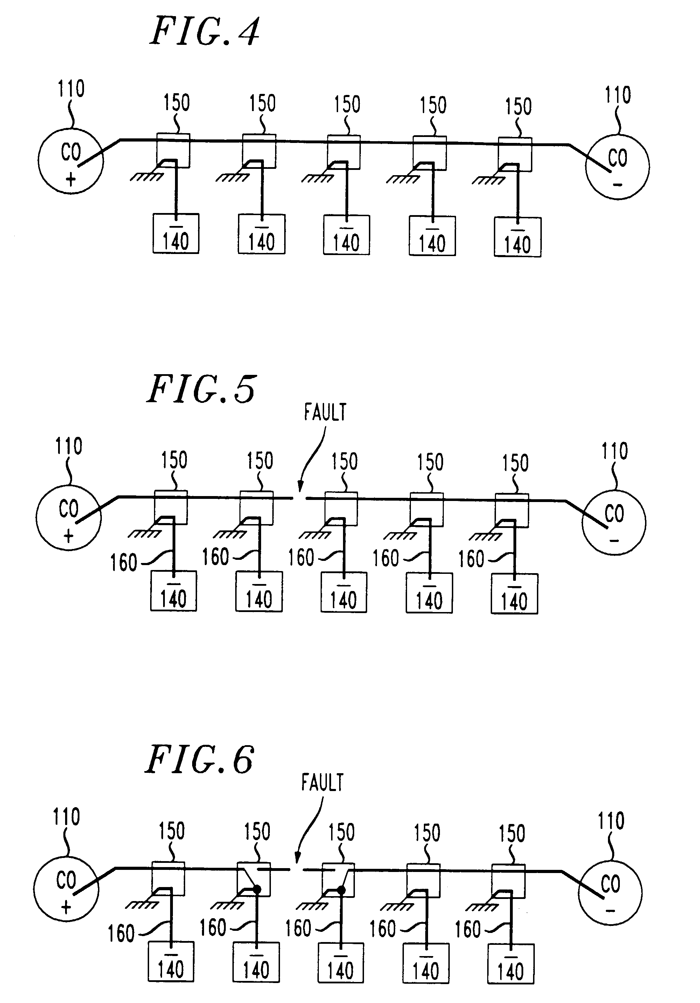

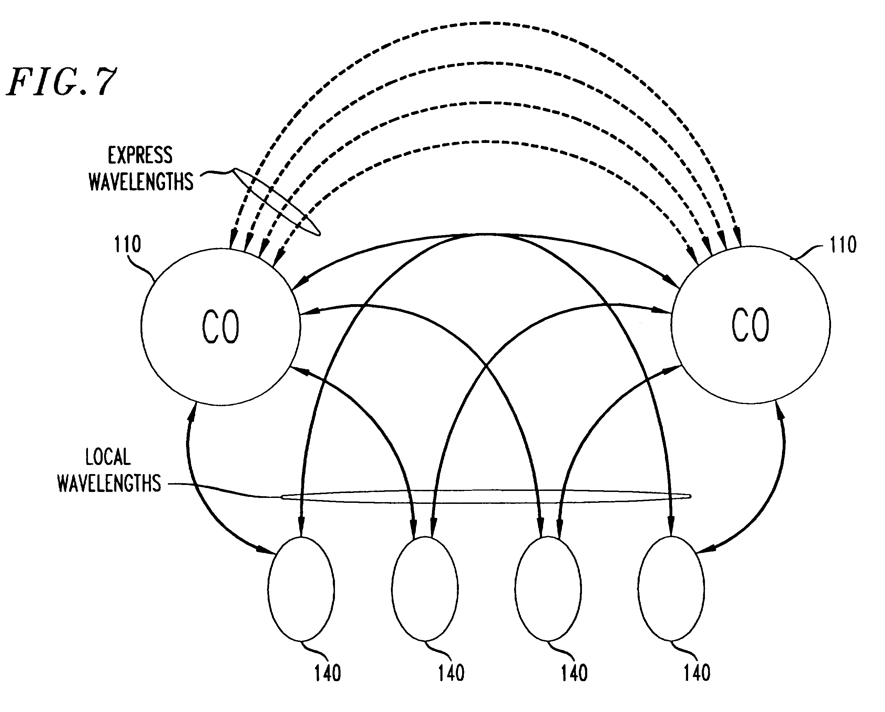

FIGs. 4, 5, and 6 illustrate power configuration states for branching units 150 under various conditions, in accordance with the invention. FIG. 4 illustrates a normal state of operation for one exemplary telecommunications link 130 (FIG. 1), when no faults exist. As shown, the telecommunications link 130 is powered from CO 110 to CO 110. Branch cables 160 may be powered, if necessary, from the cable stations 140 to ground at the branching unit 150, as shown. In the event of a fault, as shown in FIG. 5, the power state is reconfigured to the state shown in FIG. 6 under control of controller 310 (FIG. 3).

FIG. 7 shows the traffic paths in one exemplary telecommunications link 130 in the hybrid ring network 100 shown in FIG. 1, in accordance with the invention. For purposes of clarity in illustration, only four cable stations 140 are shown. FIG. 7 shows cable stations 140 having diverse traffic paths between adjacent COs 110. Such a feature advantageously provides, in accordance with the invention, fault tolerance, i.e., communications traffic restoration on the ring in the event of a fault. Faults could include, for example, fiber failures such as a cut, degraded signals, or equipment failures.

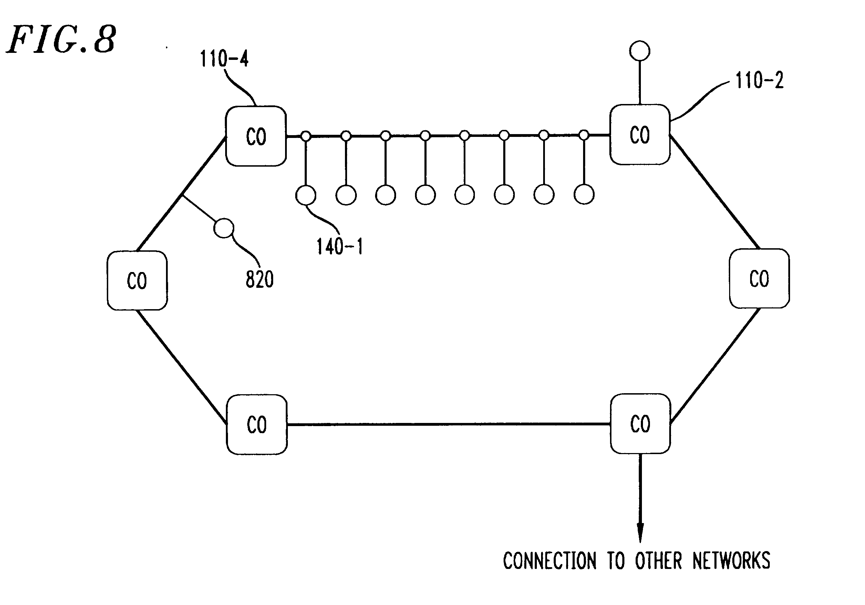

Referring to FIG. 8, the following examples are useful in illustrating this feature. Assume that the normal communications path between cable station 140-1 and cable station 820 passes through CO 110-4. In a first example, a fault occurs somewhere between cable station 140-1 and CO 110-4. Communications traffic between these cable stations is rerouted on a communications path passing through cable station 140-1 to CO 110-2, around the ring to CO 110-4, and then to cable station 820. In a second example, the fault occurs somewhere between CO 110-4 and cable station 820. In this case, communications traffic is rerouted on a communications path passing through CO 110-2, around the ring, to CO 110-M, and then to cable station 820. As the above examples show, a hybrid ring network is herein achieved, in accordance with the principles of the invention, that incorporates both line and path switching. Those skilled in the art will recognize that line switching occurs between cable stations and COs, while path switching occurs between COs. Such a hybrid arrangement advantageously allows the hybrid ring network to provide telecommunications services with a high degree of reliability.

Without in any way affecting the generality of the foregoing description. Table 1 below presents some typical specifications for hybrid ring network 100 shown in FIG. 1.

**TABLE 1**

| | |
|---|---|
| No of COs | 8 |
| No. of telecommunications links | 8 |
| No. of cable stations/telecommunication link | 8 |
| Total no. cable stations+COs | 72 |
| No. of optical fiber pairs/telecommunications link | 2 |
| No. of different wavelengths, N | 8 |
| No. of wavelengths/optical fiber pair | 8 |
| No. of optical channel/telecommunications link | 16 |
| Transmission rate per optical channel | 2.5 Gbits/sec |
| Total hybrid ring network capacity | 40 Gbit/sec |
| Typical telecommunications link length | ≈6,000 km |
| Typical cable station to CO cable length | 100-6,000 km |
| Optical channel communications signal format | SDH STM-1/STM-16 |
| No. of uncompressed voice circuits/optical channel | ≈30,000 |

It will be understood that the particular techniques described above are only illustrative of the principles of the present invention, and that various modifications could be made by those skilled in the art without departing from the scope of the present invention, which is limited only by the claims that follow.

## Claims

1. A telecommunications link for connecting a plurality of switching nodes. comprising:
at least one optical fiber adapted for transporting a plurality of wavelength division multiplexed channels, wherein each of said plurality of optical channels is defined by a different wavelength; and
at least one branching unit disposed along said at least one optical fiber, wherein
said at least one branching unit includes at least one add-drop multiplexer for adding and dropping predetermined ones of said plurality of optical channels to and from a terminal coupled to said branching unit, and
said branching unit is adapted to pass predetermined ones of said plurality of optical channels between said plurality of switching nodes.

2. The telecommunications link of claim 1 wherein said add-drop multiplexer is selected from the group consisting of Fabry-Perot gratings, Bragg gratings, couplers, and splitters.

3. The telecommunications link of claim 1 wherein said add-drop multiplexer is an optical channel adding/dropping filter.

4. The telecommunications link of claim 1 wherein said add-drop multiplexer is an optical channel dropping filter with integrated transceivers.

5. The telecommunications link of claim 1 wherein said add-drop multiplexer is a fast tunable channel dropping filter.

6. A telecommunications network, comprising:
(a) a plurality of switching nodes;
(b) at least one telecommunications link for connecting said plurality of switching nodes, the telecommunications link including
at least one optical fiber adapted for transporting a plurality of wavelength division multiplexed channels, wherein each of said plurality of optical channels is defined by a different wavelength, and
at least one branching unit disposed along said at least one optical fiber, wherein
said branching unit is adapted to pass predetermined ones of said plurality of optical channels between said plurality of switching nodes; and
said at least one branching unit includes at least one add-drop multiplexer for adding and dropping predetermined ones of said plurality of optical channels to and from
(c) a terminal coupled to said at least one branching unit.

7. The telecommunications network of claim 6 wherein said telecommunications network has a complete ring topology.

8. The telecommunications network of claim 6 wherein said telecommunications network has a partial ring topology.

9. The telecommunications network of claim 6 wherein said telecommunications network has a bus topology.

10. The telecommunications network of claim 6 wherein said telecommunications network has a combined ring and bus topology.

11. The telecommunications network of claim 6 wherein said telecommunications network has a partial ring topology.

12. The telecommunications network of claim 6 wherein said add-drop multiplexer is selected from the group consisting of Fabry-Perot gratings, Bragg gratings, couplers, and splitters.

13. The telecommunications network of claim 6 wherein said add-drop multiplexer is an optical channel adding/dropping filter.

14. The telecommunications network of claim 6 wherein said add-drop multiplexer is an optical channel dropping filter with integrated transceivers.

15. The telecommunications network of claim 6 wherein said add-drop multiplexer is a fast tunable channel dropping filter.
